# EUROPÄISCHE PATENTANMELDUNG

(11) **EP 2 204 513 A2**
(43) Veröffentlichungstag der Anmeldung: **07.07.2010**
(21) Anmeldenummer: 09075569.5
(22) Anmeldetag: 23.12.2009
(51) Int. Cl.: E04B 1/80

(54) **Mehrschichtige Wärmedämmplatte und Verfahren zum Aufbau einer Wärmedammfassade**

(30) Priorität: 30.12.2008 DE 102008064572
(71) Anmelder: alsecco GmbH & Co KG, 36208 Wildeck-Richelsdorf (DE)
(72) Erfinder: Brox, Matthias, 36199 Rothenburg a.d. Fulda (DE); Wagner, Frank, 69483 Wald-Michelbach (DE)
(74) Vertreter: Pfenning, Meinig & Partner GbR

(57) **Zusammenfassung**

Mehrschichtige Wärmedämmplatte mit mindestens drei Schichten, wobei mindestens eine innere der mindestens drei Schichten hydrophobierte, pyrogene Kieselsäurepartikel enthält, die keine Evakuierung erfordert.

## Beschreibung

Die Erfindung betrifft eine mehrschichtige Wärmedämmplatte und ein Verfahren zum Aufbau einer Wärmedämmfassade.

Wärmedämmende Fassadensysteme tragen nicht nur bei Neubauten, sondern auch bei der Altbausanierung zu einer erheblichen Verringerung des Bedarfs von Wärmeenergie bei. Aufgrund der gesetzlich vorgeschriebenen Energieeinsparverordnung existiert eine große Nachfrage nach leistungsstarken Dämmstoffen mit dem Ziel durch einen möglichst schlanken Wandaufbau eine hohe Wärmedämmung mit geringen Kosten zu erreichen.

In der DE 101 47 409 A1 ist ein wärmeisolierendes, trägfähiges Bauelement und ein Verfahren zu seiner Herstellung beschrieben, bei dem zwischen zwei äußeren Schalen, von denen mindestens eine aus einem tragfähigen Material besteht, eine Isolierschicht aus gepresstem, nanoporösen Pulver, z.B. aus pyrogener Kieselsäure, in Plattenform gepresst und in eine Folienumhüllung eingebracht, evakuiert und vakuumdicht verschweißt angeordnet ist. Zusätzlich ist ein Kantenschutz entlang des umlaufenden Randes der Isolierschicht angebracht. Für ein einfaches Zusammenfügen sind die wärmeisolierenden Bauelemente zudem komplementär gefalzt.

Aus der DE 197 19 509 C2 ist eine Wärmedämmverbundplatte, mit einem z.B. aus Korkstein, Polyurethan, Hartschaum oder extrudierbarem Polystyrol bestehenden Schichtträger und weiteren, vorzugsweise aus Vermiculit, pyrogener Kieselsäure und mineralischen Trübungs- und Bindemitteln bestehenden Isolierschichten bekannt.

Die DE 103 59 005 A1 offenbart eine Verbundwärmedämmplatte mit einer beidseitig von Polyurethan umschäumten Vakuumdämmung aus z.B. mikroporöser Kieselsäure, einer Abdeckung aus Aluminiumfolie und einer aufgeklebten weiteren Platte aus Polyurethanwerkstoff, die mit tragenden Platten aus Beton oder Holz kombiniert werden kann.

In der DE 10 2004 001673 A1 ist ein Sandwichelement zur Schall- und Wärmedämmung beschrieben, das aus einem Verbund von zwei Platten aus Press-, Schaum- und Faserwerkstoffen, wie z.B. Polyethylen, Polystyrol oder Polyurethan und einem kraftschlüssig eingebetteten Vakuumisolationspaneel aus bevorzugt pyrogener Kieselsäure besteht.

Die genannten Druckschriften zeigen einen vergleichsweise aufwändigen, ein Vakuum oder zahlreiche Materialien erfordernden und damit kostenintensiven Schichtaufbau für ein Wärme dämmendes Fassendensystem.

Es ergibt sich die Aufgabe eine Wärmedammplatte für den Aufbau eines Wärme dämmenden Fassendensystems zu entwickeln, die mit geringem Aufwand einen effizienten und zugleich kostengünstigen Schichtaufbau für die Wärmedämmung ermöglicht.

Diese Aufgabe wird erfindungsgemäß gelöst durch eine mehrschichtige Wärmedämmplatte mit den Merkmalen des Anspruchs 1 und ein Verfahren mit den Merkmalen des Anspruchs 8. Vorteilhafte Ausgestaltungen und Weiterbildungen der Erfindung ergeben sich mit den Merkmalen der Unteransprüche.

Erfindungsgemäß wird eine mehrschichtige Wärmedämmplatte mit mindestens drei Schichten vorgeschlagen, wobei mindestens eine innere Schicht der mindestens drei Schichten hydrophobierte, pyrogene Kieselsäurepartikel enthält. Hydrophobierte, pyrogene Kieselsäurepartikel sind in einem vergleichsweise einfachen Prozess herstellbar und haben zu Platten verpresst eine ausgezeichnet geringe Wärmeleitfähigkeit von weniger als 15 mW/(m*K). Die Einbettung von mindestens einer aus z.B. mit Organosiliziumverbindungen hydrophobierten, pyrogenen Kieselsäurepartikeln bestehenden Schicht ermöglicht den kostengünstigen Aufbau einer Wärmedämmplatte mit hoher Effizienz.

Die hydrophobierten, pyrogenen Kieselsäurepartikel können mit Filamenten und Trübungsmitteln zu der mindestens einen inneren Schicht verpresst sein. Zur Verbesserung von Konsistenz und Verarbeitbarkeit werden hydrophobierten, pyrogenen Kieselsäurepartikeln Filamente und Trübungsmittel zugegeben und durch das Verpressen des zusammengesetzten Dämmmaterials wird eine weitere Verbesserung der Wärmedämmeigenschaften erreicht.

Die mindestens eine hydrophobierte, pyrogene Kieselsäurepartikel enthaltende Schicht ist nicht evakuiert. Das Evakuieren der pyrogenen Kieselsäurepartikelschicht ist ein aufwändiger Vorgang, der zwar eine weitere Verbesserung der Wärmedämmeigenschaften bewirkt, eine nicht evakuierte Schicht pyrogener Kieselsäurepartikel erreicht jedoch bereits auch eine sehr niedrige Wärmeleitfähigkeit von 18 bis 20 mW/(m*K). Nach erfolgter Hydrophobierung liegt die Wärmeleitfähigkeit bei nur noch 13 bis 15 mW/(m*K).

Um die mindestens eine innere Schicht aus hydrophobierten, pyrogenen Kieselsäurepartikeln vor Feuchtigkeit, Schmutz und mechanischen Einwirkungen zu schützen, kann diese Schicht von einer vorderen und einer hinteren Deckschicht eingebettet sein.

Eine weitere Verbesserung der Wärmedämmeigenschaften kann erzielt werden, indem mindestens zwei innere Schichten aus hydrophobierten, pyrogenen Kieselsäurepartikeln zwischen zwei Decksichten und mindestens einer Zwischenschicht vorgesehen sind.

Für die vordere und die hintere Deckschicht können bevorzugt mineralische und organische Dämmstoffe ausgewählt werden, die aus aufgeschäumtem und extrudiertem Polystyrol, aus Polyurethan, Polyisocyanurat, Phenolschaum oder einem anderen geeigneten Dämmstoff hergestellt sind. Die Verwendung konventioneller Dämmmaterialien ermöglicht eine kostengünstige und anwendungsspezifisch anpassbare Auswahl eines geeigneten Dämmstoffes für die schützenden Deckschichten.

Die Stärke der Platten kann vorzugsweise in einem Bereich von 5 bis 300 mm liegen. Damit kann ein weiter Bereich jeweils erforderlicher Wärmedämmeigenschaften abgedeckt werden.

Eine standardisierte Ausführung kann bevorzugt eine Abmessung von 1000 mm x 500 mm haben. So können die Planung und die Errichtung einer Wärmedämmfassade unter Verwendung bekannter Standardmaße erfolgen.

Vorzugsweise sind gegenüberliegenden Seiten der Schichtanordnung aus Deckschichten mindestens einer inneren Schicht und mindestens einer Zwischenschicht mit Stufenfalzen versehen. Es können an zwei rechtwinklig angeordneten Seiten der Wärmedämmplatte Stufenfalze und an zwei, den rechtwinklig angeordneten Seiten gegenüber liegenden Seiten komplementäre Stufenfalze angeordnet sein. Dadurch wird an jeder Fuge eine Überlappung der inneren Kieselsäureschichten erreicht und ein Auftreten von Wärmebrücken wird vermieden. In einigen Ausführungsformen kann eine Überlappungslänge der inneren Schichten zweier benachbarter Platten mindestens 2 cm oder sogar über 3 cm betragen.

Ein Verfahren zum Aufbau einer Wärmedämmfassade aus Dämmplatten, die hydrophobierte, pyrogene Kieselsäurepartikel enthalten, umfasst folgende Schritte: Die Fassade wird zunächst aus Dämmplatten mit einem standardisierten Format aufgebaut, daraufhin werden fehlende, nicht dem Standardformat entsprechende und noch einzupassende Dämmplatten zugeschnitten. Ein solches Zuschneiden wird nur durch die Verwendung von nicht-evakuierten Wärmedämmplatten möglich, da für evakuierte Wärmedämmplatten im Gegensatz zu den erfindungsgemäßen Wärmedämmplatten keine Schneidbarkeit gegeben ist. Die Schnittflächen werden mit einem Versiegelungsmittel, z.B. einem Spezialharz versiegelt und zur Vervollständigung der Fassade eingesetzt. Das Verfahren ermöglicht einen Zuschnitt vor Ort, da beim Zuschneiden von Passstücken, z.B. für eine Dachschräge, keine Vakuumisolierung zerstört wird. Um die Schnittflächen, insbesondere die freiliegende Schicht aus hydrophobierter, pyrogener Kieselsäure vor dem Eindringen von Schmutz und Feuchtigkeit zu schützen, werden die Schnittflächen mit einem geeigneten Harz versiegelt. So kann eine komplette Wärmedämmfassade aus Standardformatplatten in sehr einfacher und kostengünstiger Weise vor Ort errichtet werden.

Die Verwendung von Mineralwolle, z.B. Stein- oder Glaswolle als Dämmstoff ermöglicht die Entstehung einer nicht brennbaren Wärmedämmplatte mit einer Wärmeleitfähigkeit, die bei einer Temperatur von 10°C weniger als 25 W/m*K beträgt und bei einem erfolgenden Rückbau als ökologisch unbedenklicher Bauschutt entsorgt werden kann.

Die Wärmeleitfähigkeit eines Dämmplattenaufbaus mit einer 15 mm messenden Schicht aus verpressten, pyrogenen Kieselsäurepartikeln, die nicht hydrophobiert wurde und von zwei 10 mm dicken Schichten aus aufgeschäumten Polystyrol (035er EPS-Platten) ummantelt ist, liegt im Mittel bei einem Wert von 25 mW/(m*K). Die Verwendung von hydrophobierter, pyrogener Kieselsäure ermöglicht eine weitere Absenkung der Wärmeleitfähigkeit auf 20 mW/(m*K), da die Hohlräume im Gefüge der verpressten pyrogenen Kieselsäure durch. Hydrophobieren verringert werden.

Eine weitere Verbesserung der Wärmedämmung kann erzielt werden, in dem die Schicht aus pyrogener hydrophobierter Kieselsäurepartikeln deutlich dicker, beispielsweise dicker als 6 cm ausgebildet wird. Die Möglichkeit derart dicke Dämmschichten vorzusehen ist ein weiterer Vorteil gegenüber Vakuumdämmplatten, welche auf eine Dicke von unter 6 cm beschränkt sind.

Für die Einbettung der hydrophobierten und verpressten Kieselsäurepartikelschicht in vorzugsweise eine Styroporummantelung (= expandiertes Polystyrol, EPS) werden die mehrschichtigen Sandwichpaneele einzeln gebacken als Automatenplatten hergestellt.

Da das Hydrophobieren nur einen Bruchteil der Kosten für die Erzeugung des Vakuums bei Schichten aus pyrogenen Kieselsäurepartikeln erfordert, kann durch die erfindungsgemäß aufgebaute Dämmplatte eine effiziente und zugleich herausragend kostengünstige Wärmedämmung erreicht werden.

Ausführungsbeispiele der Erfindung werden nachfolgend anhand der Figuren 1 bis 3 erläutert. Es zeigen:
- Fig. 1: eine dreidimensionale Prinzipdarstellung einer dreischichtigen Wärmedämmplatte nach der Erfindung,
- Fig. 2: einen Querschnitt von zwei dreischichtigen Wärmedämmplatten mit Stufenfalz und Angabe der Schichtstärken nach einem der ersten Ausführungsbeispiele der Erfindung und
- Fig. 3: einen Querschnitt von zwei fünfschichtigen Wärmedämmplatten mit Stufenfalz und Angabe der Schichtstärken nach einem zweiten Ausführungsbeispiel der Erfindung.

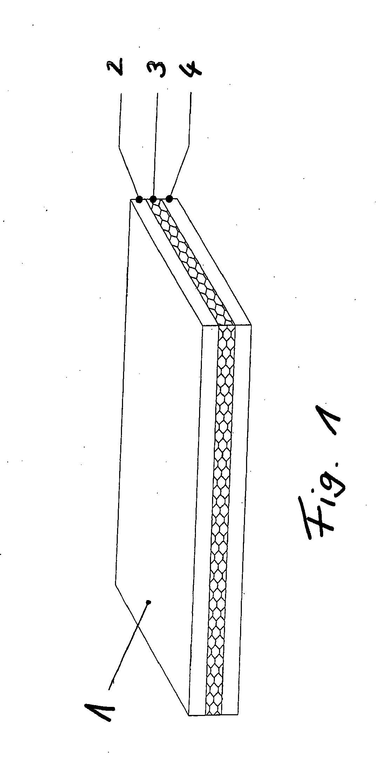

Fig. 1 zeigt eine dreidimensionale Darstellung eines prinzipiellen Aufbaus einer mehrschichtigen Wärmedämmplatte 1, die eine vordere Deckschicht 2, eine innere Schicht 3 und eine hintere Deckschicht 4 aufweist. Die innere Schicht 3 ist zwischen der vorderen Deckschicht 2 und der hinteren Deckschicht 3 angeordnet. Während die vordere Deckschicht 2 und die hintere Deckschicht 4 aus einem organischen Dämmstoff bestehen, der beispielsweise aufgeschäumtes und extrudiertes Polystyrol, Polyurethan, Polyisocyanurat, Phenolschaum, ein mineralischer Dämmstoff wie z.B. Glas- und Steinwolle oder ein anderer geeigneter Dämmstoff sein kann, ist die innere Schicht 3 ohne eine Evakuierung aus hydrophobierten, pyrogenen Kieselsäurepartikeln hergestellt, die z.B. mit Filamenten und Trübungsmitteln verpresst wurde. Die Hydrophobierung kann unter Verwendung von Siliconen durchgeführt werden.

Eine standardisierte Ausführung der mehrschichtigen Wärmedämmplatte 1 hat bevorzugt die Abmessungen 1000 mm x 500 mm und die Stärke der Platten liegt vorzugsweise in einem Bereich von 5 bis 300 mm.

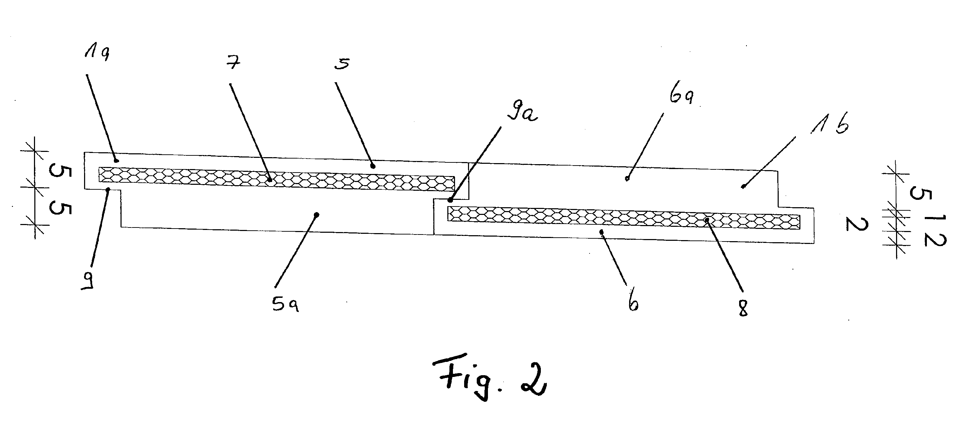

Fig. 2 zeigt einen Querschnitt von zwei dreischichtigen Wärmedämmplatten 1a und 1b mit Stufenfalz 9 und Angabe der Schichtstärken. Eine erste dreischichtige Wärmedämmplatte 1a mit einer Gesamtstärke von 10 cm besteht aus einer 2 cm dicken inneren Schicht 7, die von einer 6 cm dicken unteren Deckschicht 5a und einer 2 cm dicken oberen Deckschicht 5 eingebettet ist.

Die untere Deckschicht 5a bildet mit einer Stärke von 5 cm einen Stufenfalz 9, der auf einer gegenüberliegenden Seite komplementär angeordnet ist, wobei die oberhalb der unteren Deckschicht 5a angeordnete innere Schicht 7 den Stufenfalz 9 überlappt und dabei von der oberen Deckschicht 5 und einem oberen Teilabschnitt mit einer Dicke von 1 cm der unteren Deckschicht 5a eingebettet ist.

Eine zweite dreischichtige Wärmedämmplatte 1b ist um 180° gedreht mit dementsprechend umgekehrter Schichtabfolge und komplementärer Stufenfalz 9a neben der Wärmedämmplatte 1a angeordnet und bildet mit dieser einen Aufbau, bei dem die innere Schicht 7 der Wärmedämmplatte 1a eine innere Schicht 8 der Wärmedämmplatte 1b aufgrund der komplementären Stufenfalz 9a von oben überlappt, wobei eine Überlappungslänge der beiden inneren Schichten 7, 8 vorzugsweise mindestens 3cm beträgt. Die 2 cm dicke innere Schicht 8 der Wärmedämmplatte 1b ist dabei von einer 2 cm dicken unteren Deckschicht 6 und einer 6 cm dicken oberen Deckschicht 6a eingebettet.

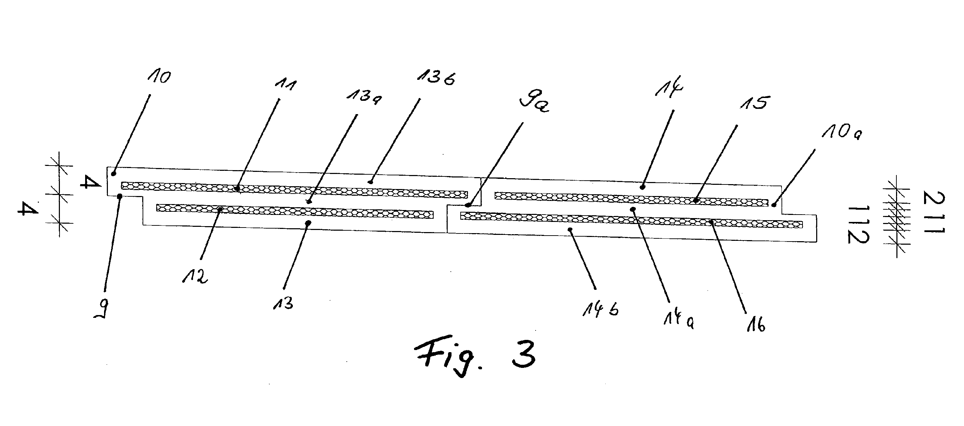

Fig. 3 zeigt einen Querschnitt von zwei dreischichtigen Wärmedämmplatten 10 und 10a mit Stufenfalz 9 und Angabe der Schichtstärken. Eine erste fünfschichtige Wärmedämmplatte 10 mit einer Gesamtstärke von 8 cm besteht aus zwei jeweils 1 cm dicken inneren Schichten 11 und 12, zwischen denen eine mittlere Schicht 13a mit einer Dicke von 2 cm liegt, während oberhalb der inneren Schicht 11 eine obere Deckschicht 13b mit einer Dicke von 2 cm und unterhalb der inneren Schicht 12 eine untere Deckschicht 13 mit einer Dicke von 2 cm angeordnet sind, wobei die inneren Schichten 11 und 12 von den Deckschichten 13, 13a und 13b eingebettet sind.

Zudem bilden die untere Deckschicht 13, die innere Schicht 12 und mit einer Stärke von 1 cm ein oberer Teilabschnitt der mittleren Schicht 13a einen Stufenfalz 9, der auf einer gegenüberliegenden Seite komplementär angeordnet ist, wobei die oberhalb der Stufenfalz 9 angeordnete innere Schicht 11 den Stufenfalz 9 überlappt und dabei von der oberen Deckschicht 13b und einem unteren Teilabschnitt mit einer Dicke von 1 cm der mittleren Schicht 13a eingebettet ist.

Eine zweite fünfschichtige Wärmedämmplatte 10a ist um 180° gedreht mit dementsprechend umgekehrter Schichtabfolge und komplementärer Stufenfalz 9a neben der Wärmedämmplatte 10 mit zwei inneren Schichten 15 und 16 angeordnet und bildet mit zusammen mit der Wärmedämmplatte 10 einen Aufbau, bei dem die innere Schicht 11 der Wärmedämmplatte 10 die innere Schicht 16 der Wärmedämmplatte 10a aufgrund der komplementären Stufenfalz 9a von oben überlappt. Die 1 cm dicken inneren Schichten 15 und 16 der Wärmedämmplatte 10a sind dabei von einer unteren Deckschicht 14b, einer mittleren Schicht 14a und einer oberen Deckschicht 14 eingebettet.

Um die Eigenschaften von erfindungsgemäßen Wärmedämmplatten genauer zu untersuchen wurde eine Probe einer dreischichtigen Wärmedämmplatte genauer untersucht. Die Platte hatte eine Nenndicke von 40 mm, wobei eine entsprechend der Norm EN 823 gemessene Dicke von der Nenndicke abwich und 39,2 mm betrug. Die Platte ist aus zwei außen liegenden Schichten aus EPS mit einer Dicke von jeweils ca. 10 mm und einer innen liegenden Schicht, welche eine Dicke von circa 20mm aufweist und hydrophobierte pyrogene Kieselsäure enthält, aufgebaut. Eine Grundfläche der Probe beträgt 25 dm², eine Masse der Probe 163,1 g und eine Rohdichte 16,6 kg/m³. Der Prüfdruck betrug 2500 Pa.

Die Probe wurde in ein Einplatten-Wärmeleitfähigkeitsmessgerät "lambda-Meter EP-500" der Firma Lambda-Messtechnik GmbH, Dresden eingelegt. Dieses entspricht der Norm EN 1946-2. Die Messung wurde durchgeführt während die Probe waagerecht orientiert und die Warmseite oben war. Die Wärmeleitmessung erfolgte gemäß den Normen ISO 8302 bzw. EN 12667.

Insgesamt wurde bei 3 verschiedenen Temperaturen jeweils eine Messung durchgeführt. Bei allen drei Messungen betrug eine Temperaturdifferenz zwischen beiden Seiten der Platte 15 K.

Die erste Messung wurde bei einer Temperatur von 10°C durchgeführt. Eine gemessene Wärmeleitfähigkeit betrug 23,96 mW/(m·K), während ein R-Wert, also ein thermischer Widerstand, von 1,636 m²K/W gemessen wurde.

Die zweite und dritte Messung wurde bei 23 bzw. 40°C durchgeführt. Eine gemessene Wärmeleitfähigkeit betrug 24,83 bzw. 26,24 mW/(m·K), während ein R-Wert von 1,579 bzw. 1,494 m²K/W gemessen wurde.

Durch lineare Regression wurde eine Gradengleichung λ = (0,0763·T + 23,15) mW/(m·K) für die Wärmeleitfähigkeit ermittelt.

Entsprechend der Gleichung ergibt sich bei 10°C eine Wärmeleitfähigkeit von 23,92 mW/(m·K) sowie ein R-Wert von 1,640 m²K/W. Ein TK-Wert, welcher die Ableitung der Wärmeleitfähigkeit nach der Temperatur angibt, beträgt 0,0763 mW/(m·K²).

Für den Aufbau einer Wärmedämmfassade aus erfindungsgemäßen Wärmedämmplatten mit einem Standardformat von vorzugsweise 1000 mm x 500 mm wird die Wärmedämmfassade zunächst so weit als möglich aus Dämmplatten mit dem standardisierten Format aufgebaut. Dann werden noch fehlende und einzupassende Dämmplattenabschnitte aus Standardformaten vor Ort zugeschnitten und die Schnittflächen werden mit einem Harz versiegelt. Anschließend werden die so präparierten Wärmedämmplattenabschnitte zur Vervollständigung der Wärmedämmfassade eingesetzt.

## Patentansprüche

1. Mehrschichtige Wärmedämmplatte (1) mit einer Schichtanordnung aus mindestens drei Schichten (2, 3, 4), **dadurch gekennzeichnet, dass** mindestens eine innere Schicht (3) der mindestens drei Schichten (2, 3, 4) hydrophobierte, pyrogene Kieselsäurepartikel enthält.

2. Wärmedämmplatte nach Anspruch 1, **dadurch gekennzeichnet, dass** den hydrophobierten, pyrogenen Kieselsäurepartikeln Filamente und Trübungsmittel zugegeben sind.

3. Wärmedämmplatte nach Anspruch 1 oder 2, **dadurch gekennzeichnet, dass** die hydrophobierten, pyrogenen Kieselsäurepartikel mit Filamenten und Trübungsmitteln zu der mindestens einen inneren Schicht (3) verpresst sind.

4. Wärmedämmplatte nach einem der Ansprüche 1 bis 3, **dadurch gekennzeichnet, dass** die mindestens eine hydrophobierte, pyrogene Kieselsäurepartikel gegebenenfalls enthaltende Schicht (3) nicht evakuiert ist.

5. Wärmedämmplatte nach einem der Ansprüche 1 bis 4, **dadurch gekennzeichnet, dass** die mindestens eine innere Schicht (3) mit jeweils einer Deckschicht (2, 4) verbunden ist.

6. Wärmedämmplatte nach einem der Ansprüche 1 bis 5, **dadurch gekennzeichnet, dass** mindestens zwei innere Schichten (11, 12) aus hydrophobierten, pyrogenen Kieselsäurepartikeln zwischen zwei Deckschichten und mindestens einer Zwischenschicht (13a) für einen alternierenden Schichtaufbau vorgesehen sind.

7. Wärmedämmplatte nach einem der Ansprüche 1 bis 6, **dadurch gekennzeichnet, dass** zumindest eine Deckschicht (2) aus einem organischen oder aus einem mineralischen Dämmstoff hergestellt ist.

8. Wärmedämmplatte nach Anspruch 7, **dadurch gekennzeichnet, dass** die organischen Dämmstoffe aufgeschäumtes und/oder extrudiertes Polystyrol, Polyurethan, Polyisocyanurat, Phenolschaum und/oder ein anderer geeigneter Dämmstoff sind.

9. Wärmedämmplatte nach einem der Ansprüche 1 bis 8, **dadurch gekennzeichnet, dass** die mindestens eine innere Schicht aus hydrophobierter pyrogener Kieselsäure mit den Deckschichten und/oder der Zwischenschicht verklebt, verpresst und/oder in diese eingeschäumt ist.

10. Wärmedämmplatte nach Anspruch 1 bis 9, **dadurch gekennzeichnet, dass** die Stärke der schichten vorzugsweise in einem Bereich von 5 bis 300 mm liegt.

11. Wärmedämmplatte nach Anspruch 1 bis 10, **dadurch gekennzeichnet, dass** eine standardisierte Ausführung bevorzugt eine Abmessung von 1000 mm x 500 mm hat.

12. Wärmedämmplatte nach Anspruch 1 bis 11, **dadurch gekennzeichnet, dass** zumindest an zwei gegenüberliegenden Seiten der Schichtanordnung ein Stufenfalz (9, 9a) vorgesehen ist.

13. Wärmedämmplatte nach Anspruch 12, **dadurch gekennzeichnet, dass** die mindestens eine innere Schicht (2, 7, 8, 11, 12, 15, 16) derart in die Deckschichten und/oder mindestens einen Zwischenschicht unter Berücksichtigung des Stufenfalzes eingebettet ist, dass im Bereich der Stufenfalze zweier benachbart angeordneter Wärmedämmplatten die jeweiligen inneren Schichten überlappen.

14. Verfahren zum Aufbau einer Wärmedämmfassade aus Wärmedämmplatten, die hydrophobierte, pyrogene Kieselsäurepartikel enthalten nach einem der Ansprüche 1 bis 13, **dadurch gekennzeichnet, dass** es folgende Schritte umfasst:
- Aufbau der Fassade aus Dämmplatten mit einem standardisierten Format unter Eingriff der Stufenfalze von benachbarten Dämmplatten,
- Zuschneiden von fehlenden, dem standardisierten Format nicht entsprechenden und noch einzupassenden Dämmplatten,
- Versiegeln der Schnittflächen mit einem Versiegelungsmittel, vorzugsweise einem Harz,
- Einsetzen der zugeschnittenen und an den Schnittflächen versiegelten Dämmplatten.
